# EUROPEAN PATENT SPECIFICATION

(11) **EP 2 601 500 B1**
(45) Date of publication and mention of the grant of the patent: **06.05.2020**
(21) Application number: 11749543.2
(22) Date of filing: 28.07.2011
(51) Int. Cl.: G01M 3/40

(54) **SYSTEM AND METHOD FOR CHECKING THE PRESENCE OF DEFECTS IN NON CONDUCTIVE ANNULAR WALLS**
SYSTEM UND VERFAHREN ZUR PRÜFUNG DES VORHANDENSEINS VON DEFEKTEN BEI NICHTLEITENDEN RINGFÖRMIGEN WÄNDEN
SYSTÈME ET PROCÉDÉ DE VÉRIFICATION DE LA PRÉSENCE DE DÉFAUTS DANS DES PAROIS ANNULAIRES NON CONDUCTRICES

(30) Priority: 02.08.2010 IT MO20100223
(43) Date of publication of application: 12.06.2013
(73) Proprietor: SACMI - Cooperativa Meccanici Imola - Societa' Cooperativa, 40026 Imola - BO (IT)
(72) Inventor: BENEDETTI, Paolo, I-41121 Modena (MO) (IT); PUCCI, Fabrizio, I-40023 Castel Guelfo di Bologna (BO) (IT)
(74) Representative: Villanova, Massimo
(86) International application number: PCT/IB2011/053363
(87) International publication number: WO 2012/017360

(56) References cited:
- WO-A1-95/09351
- US-A- 4 914 395
- US-A- 5 213 860
- US-B1- 6 984 992

## Description

### Background of the invention

The invention relates to a checking system, in particular for checking defects in a wall of an object made of a non-electrically conductive material, for example of plastics.

In particular reference is made to a system for checking the thickness of a zone of the object to check for the absence of defects, in particular weakness points having a reduced or zero thickness.

Specifically, but not exclusively, the invention can be usefully applied for checking the integrity of a facilitated opening line formed by a non-through incision obtained on an annular zone of a closure for containers, in particular a closure made of plastics having an annular portion and a lid portion that closes a side of the annular portion.

Testing the integrity of the facilitated opening line is of particular importance when this line separates the inside of the container from the exterior. In this case, in fact, the opening line, having to ensure the hermetic seal of the closure, will be formed by a non-through notch of an annular wall of the closure in which the greatest attention must nevertheless be paid to leave, along the entire extent of the opening line, a minimum wall thickness, below which the desired hermetic seal cannot be ensured.

It is thus important to provide a checking system that is able to recognise and discard closures having at least one zone with a thickness that is too thin or even with a part with a through notch.

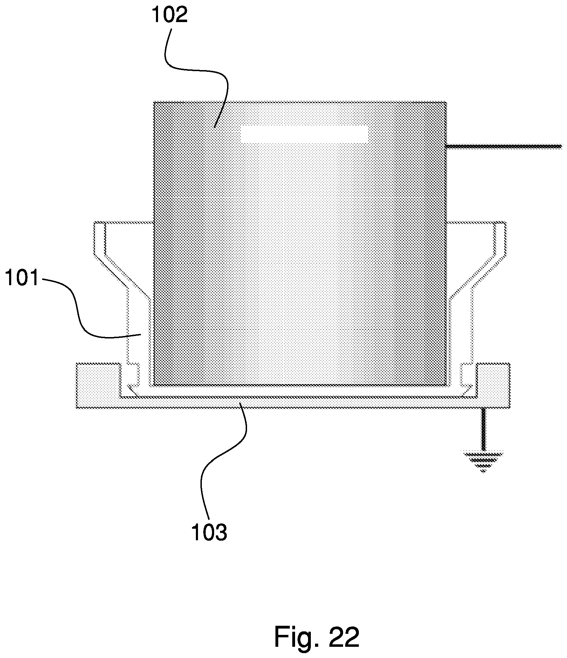

It is known a checking system (shown in figure 22) suitable for checking the integrity of the facilitated opening line in a closure for containers made of plastics having an internal cavity defined by an annular wall 101 on which the facilitated opening line is obtained. The system comprises two tools 102 and 103 made of conductive material, the one is shaped as a punch and the other as a die or cup, axially movable one with respect to the other. One of the tools 102 is arranged inside and the other one 103 outside the closure so that the facilitated opening line is interposed between the tools. A potential difference between the tools is then generated by applying a potential to the internal tool 102 and grounding the external tool 103. The system is configured in such a manner that, if the zone to be checked is not whole, an electric discharge is generated between the tools. WO 95/109351 **and** US 6984992 **disclose each** a system and a method for checking defects in annular walls by means of internal and external electrodes.

### Summary of the invention

One object of the invention is to provide a checking system that is able to check for the absence of defects in an annular wall of a body made of non-electrically conductive material.

One advantage is to make a checking system with relatively high reliability and accuracy. In particular, a checking system will be made that uses a potential difference between two electrodes arranged on opposite sides of a thickness of wall to be checked, in which disturbances and electrical air leakages will be reduced.

One advantage is to provide a checking system that is not strongly dependent on environmental conditions, for example on air temperature and humidity.

One advantage is to realize a checking system operating with an electric potential, in which the system is effective with the application of an electric potential of relatively small size.

One advantage is giving rise to a checking system that is constructionally simple and cheap.

One advantage is to conduct checking of the wholeness of a great number of objects per unit of time.

One advantage is to make a checking system that is able to check for the absence of defects in an annular wall of a body, in which the system is effective even in the presence of an undercut in the wall to be checked.

Such objects and advantages, and still others, are achieved by the checking system according to claims 1-9 and by a checking method according to claims 10-14.

### Short description of the drawings

The invention can be better understood and implemented with reference to the attached drawings that illustrate an embodiment thereof by way of non-limiting example.
Figure 1 is a top plan view of the checking system.
Figure 2 is an enlarged detail of figure 1.
Figure 3 is a partial section, in vertical elevation, of the checking system of figure 1.
Figure 4 is an enlarged detail of figure 3.
Figure 5 is an enlarged detail of figure 4.
Figures 6 and 7 are two enlarged details of figure 5 in the spark forming zones.
Figure 8 is a section in vertical elevation of a comparative example of a checking system.
Figure 9 is an enlarged detail of figure 8.
Figure 10 shows the system in figure 8 in an opening operating configuration.
Figure 11 is a section according to a horizontal plane of the system in figure 8.
Figure 12 is a top plan view of a version of the system in figure 1.
Figure 13 is a section in vertical elevation of the system in figure 12.
Figure 14 is an enlarged detail of figure 13.
Figure 15 is a top plan view of another example of the checking system.
Figure 16 is a section in vertical elevation of the system in figure 15.
Figure 17 is an enlarged detail of figure 16.
Figure 18 is a top plan view of another example of the checking system.
Figure 19 is a top plan view of another example of the checking system.
Figure 20 shows a containers closure that can be checked by the aforementioned systems.
Figure 21 is an enlarged detail of figure 20.
Figure 22 is an high voltage checking system of the prior art.

### Detailed description

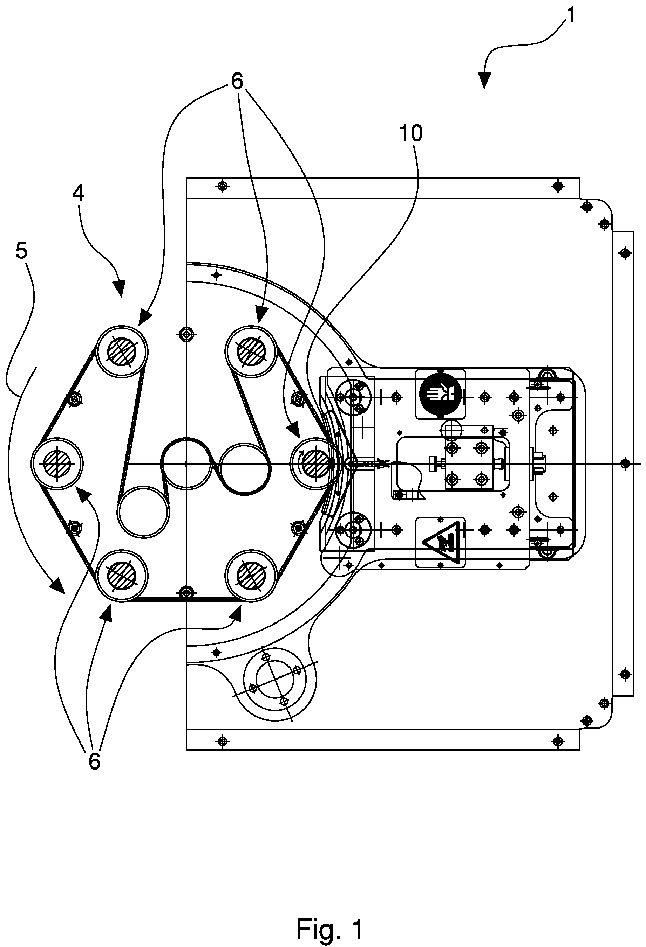

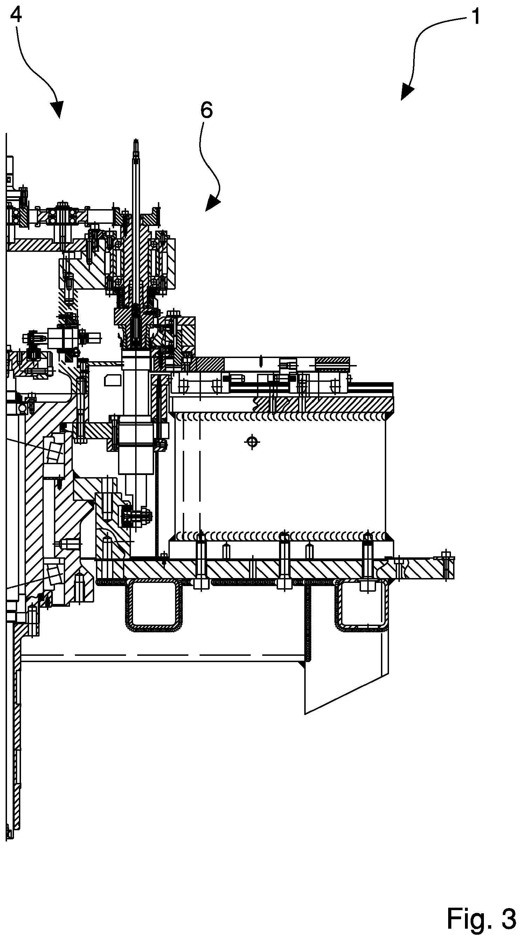

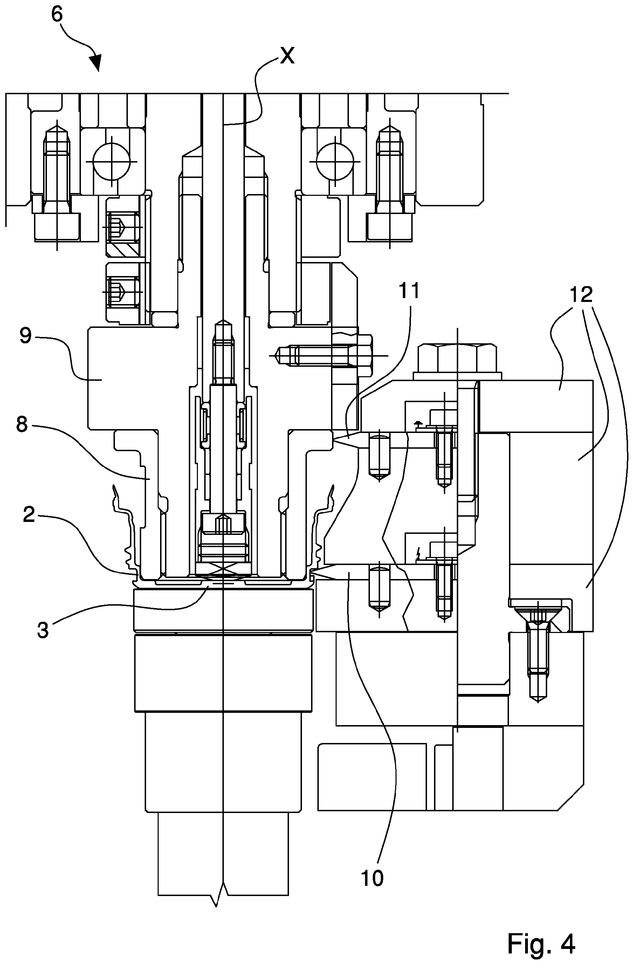

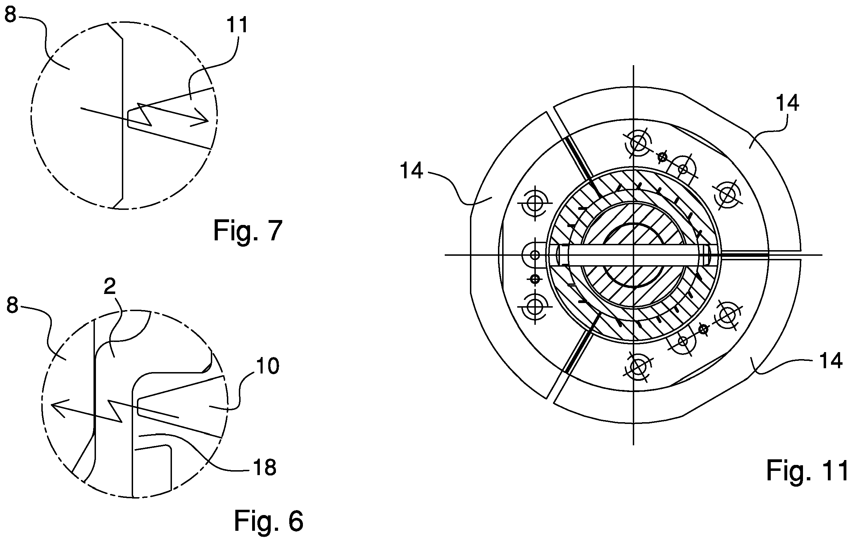

With reference to the aforesaid figures 1 to 7, overall with 1 a checking system for checking the integrity and/or the absence of defects of objects made of electrically non-conductive, insulating or dielectric materials or materials with low electric conductivity, such as, for example, plastics, has been indicated.

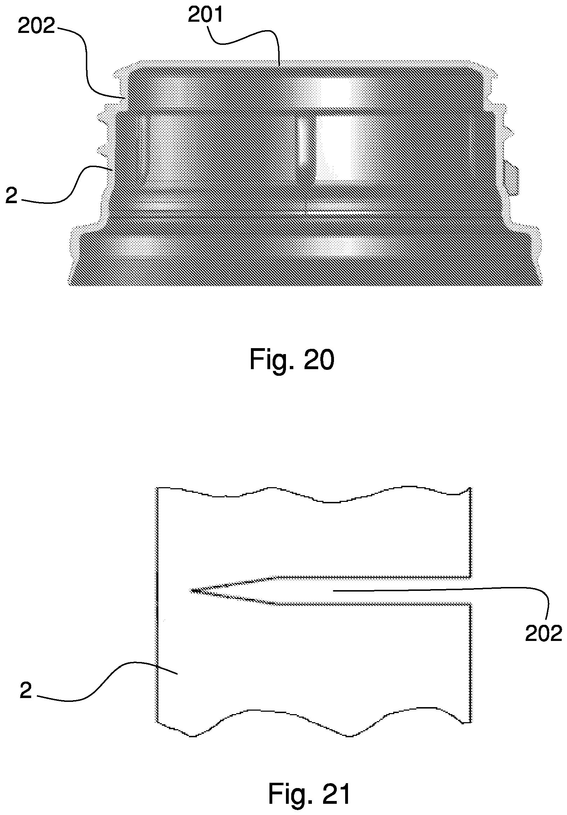

In particular, the checking system can be used to check the thickness of an annular wall of axial-symmetric shape (for example cylindrical or frustum-conical shape), such as, for example, the annular wall of a closure element for containers. Referring to figures 20 and 21, the closure element comprises an annular wall 2 and a closing wall 201 that closes an end of the annular wall. The annular wall and the closing wall are connected together by means of a facilitated opening line made of a non-through notch 202. The breakage of the facilitated opening line causes the closing wall to detach and the container to thus open.

The checking system can be used to check the integrity of an annular wall of non-uniform thickness.

The checking system can be used to check the integrity of the tamperproof band of a containers cap, in particular when the facilitated opening line of the tamperproof band has a non-through weakening.

In the presence of defects in the facilitated opening line, such as, for example, an excessive reduction or even a lack of thickness, it might not ensure the hermetic seal of the closure. It is thus necessary to check for the absence of defects in the thickness of the annular wall, in particular in the zone of greater risk of lack of hermetic seal, i.e. the notch formation zone of the facilitated opening line.

In figures 1 to 7, it has been indicated with 4 a conveying carousel, with 5 an arrow that indicates the rotation direction of the carousel 4, with 6 the spindles carried by the carousel 4, with 7 an arrow that indicates the rotation direction of each spindle 6, with 8 a (tubular) electrically conductive portion of the spindle 6, with 9 a portion (that is tubular and partially inside the portion 8) that electrically insulates the spindle 6, with 10 a electrode (hot pole), with 11 a further electrode (cold pole), with 12 electrically insulating portions of a supporting structure of the electrodes 10 and 11.

The spindles 6 are arranged on the periphery of the carousel 4 angularly (equi-)distant from one another.

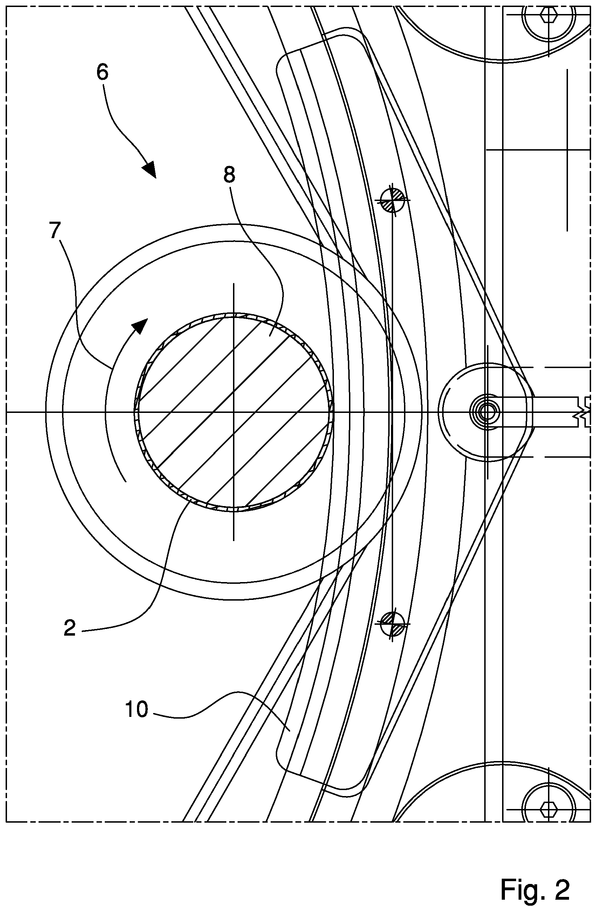

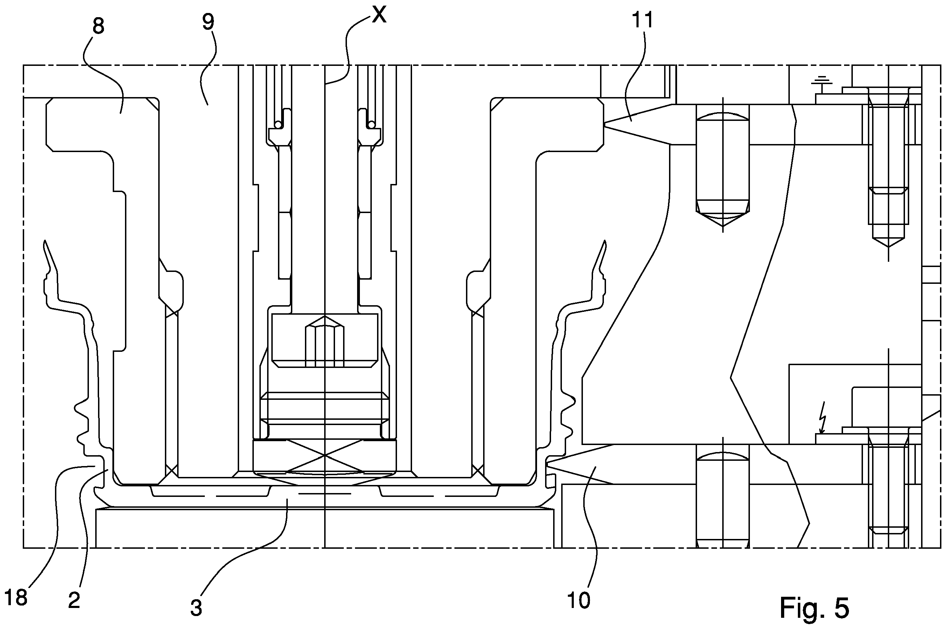

The checking system 1 comprises a first tool (comprising the spindle 6 or at least the electrically conductive portion 8 of the spindle 6) and a second tool (comprising the electrode 10) that are both made at least partially of electrically conductive material. Such tools are configured for assuming a work position (see in particular figures 2 and 5) in which the first tool (or internal tool) is arranged inside the annular wall 2 and the second tool (or external tool) is arranged outside the wall.

Such tools (spindle 6, or portion 8 of spindle, and electrode 10) are arranged at a reciprocal distance of little more (for example approximately 0.1-0.2 mm more) than the thickness of the annular wall 2 that is interposed between the tools. In particular the first (internal) tool can be inserted inside the axial-symmetric annular wall 2 in contact with the wall. The (external) second tool can be arranged in contact, or, as in the specific case, at a minimum distance (for example a distance comprised between approximately 0,1 and 0.2 mm) from the external surface of the annular wall 2.

The system 1 comprises control means for generating a potential difference between the tools in a work position and for detecting the generation of an electric discharge between the tools determined by a defect of the annular wall 2, such as, for example, an excessive reduction or a lack of thickness. Such control means comprises a generator of known type and not illustrated that is able to apply an electric potential, for example, to the second tool (hot pole) and a sensor of known type and non-illustrated to detect an electric discharge (spark) that traverses the space between the tools.

The system 1 further comprises movement means (comprising the spindle-holding carousel 4) configured for taking the tools to the work position via a relative movement of at least one tool with respect to the other. In particular this corresponding movement may have, as in the specific case, at least one motion component in a direction that is transverse to the axis of the annular wall that is interposed between the tools. It is possible that this movement comprises at least one motion component in a direction that is perpendicular to the axis of the annular wall. In the case of figures 1 to 7, as will be explained more fully below, this corresponding movement comprises approach movements of the first internal and movable tool (spindle 6, or portion 8 of spindle, rotated by the carousel 4), towards the second external and fixed second tool (electrode 10).

In the specific case, the first (internal) tool comprises the spindle 6 (or at least the conductive portion 8 of the spindle) that is rotatable around a rotation axis X and is insertable into the annular wall 2 to move the annular wall 2 by dragging. The axis X of the spindle 6 may coincide, in use, with the axis of the annular wall 2.

The second (external) tool comprises the (fixed) electrode 10 facing the spindle 6, at least in one portion of the path travelled by the spindle carried by the carousel 4, and being situated outside the annular wall 2.

The movement means, which in the specific case comprises the conveying carousel 4 that carries the plurality of spindles 6, is configured for inserting each spindle 6 into a corresponding annular wall 2 and for moving the spindle 6 by rotating the annular wall 2 facing the electrode 10 in such a manner that the integrity check is conducted on an entire circumference of the annular wall 2.

The second (external) tool can operate, as in the specific example, as a hot electrode to which the control means applies an electric potential.

The electrode 10 comprises at least one circular-sector shaped portion coaxial with the rotation axis of the carousel 4. In particular, the circular sector is arranged facing a zone of the circular path along which the spindles 6 make the various annular walls 2 travel.

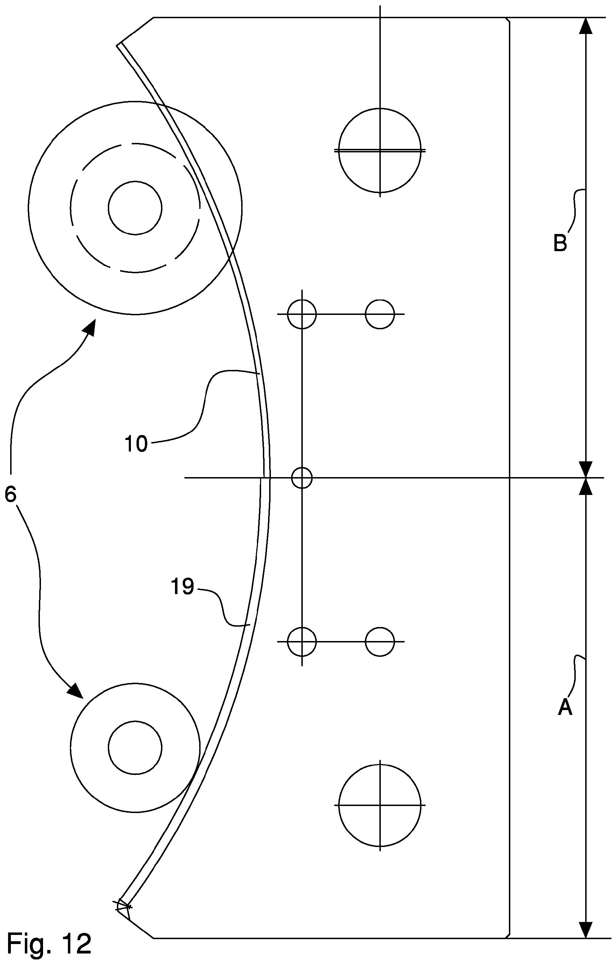

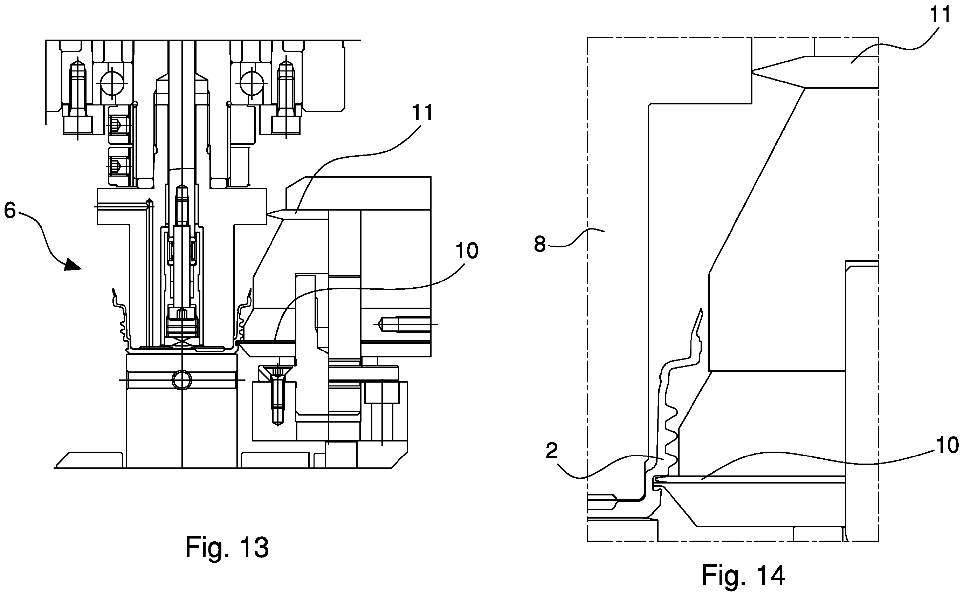

The second tool (spindle 6 or portion 8 thereof) is carried, as is seen, by a movable support along a preset path. The movable support comprises the spindle-holding carousel 4. Each spindle 6 is rotated around its own axis whilst it travels along the (circular) path dragged by the movable support (carousel 4). The second tool, or electrode 10, is arranged alongside the aforesaid (circular) path. In the illustrated example in figures 12 to 14, the second tool, or electrode 10, is arranged downstream of a cutting device 19 configured for forming the facilitated opening line by means of a non-through notch along a circumference of the annular wall 2. The second tool (electrode 10) is arranged for operating in the zone of the aforesaid non-through notch. In figure 12 the zone where cutting device 19 operates has been indicated by A and the zone (contiguous to zone A) where the electrode 8 operates has been indicated by B. The cutting device 19 can be operationally associated with the spindle-holding carousel 4, as in the example in figures 12 to 14, wherein the cutting device 19 is arranged along the path travelled along by the spindles 6 by the carousel 4.

In another example that is not illustrated, the cutting device can be operationally associated with a further spindle-holding carousel arranged upstream of the carousel 4. In this case the cutting device can operate on the plurality of annular walls 2 at a further path travelled by the annular walls 2, in which this further path is arranged upstream of the path defined by the spindle-holding carousel 4; this further path can be connected in a continuous line with the path defined by the spindle-holding carousel 4.

The system may comprise a control unit, which is not illustrated, programmed in such a manner as to associate a defective point of the non-through notch, which has been found to be defective because it is traversed by an electric discharge, with the corresponding point of the cutting device that has cut the defective point. Such an association is made on the basis of the position of the spindle at the instant of an electric discharge and the movement travelled by the annular wall along the path from the cutting device to the electrode.

The control unit can thus be connected to sensor means that is able to detect the position of the various spindles 6 instant by instant (at least in the zone of the electrode 10), in such a manner as to be able to determine the point of the spindle facing the electrode 10 at the instant of an electric discharge; at this point the defect on the annular wall 2 will be located.

The control unit will further have the information that is necessary in order to know the movements made by the various spindles 6 (at least from the cutting device to the electrode 10) such as to determine in which point of the cutting device the point of the spindle 6, at which the defect is located, was located.

The control unit will thus be able to determine (*a posteriori*) a possible defective point in the cutting device.

If the cutting device is outside the path of the spindles 6 on the carousel 4 (for example is associated with a further carousel arranged upstream of the carousel 4), the control unit can also be informed of the path travelled by the annular walls 2 before the carousel 4, at least from the cutting device.

If the cutting device is provided with a plurality of cutting heads or spindles, the control unit will be able to determine which cutting head has determined the defect in the cut of the wall.

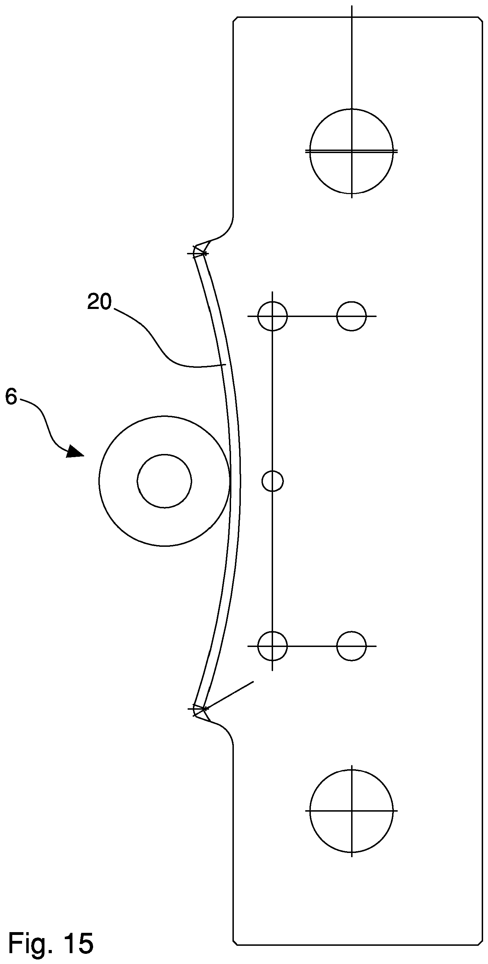

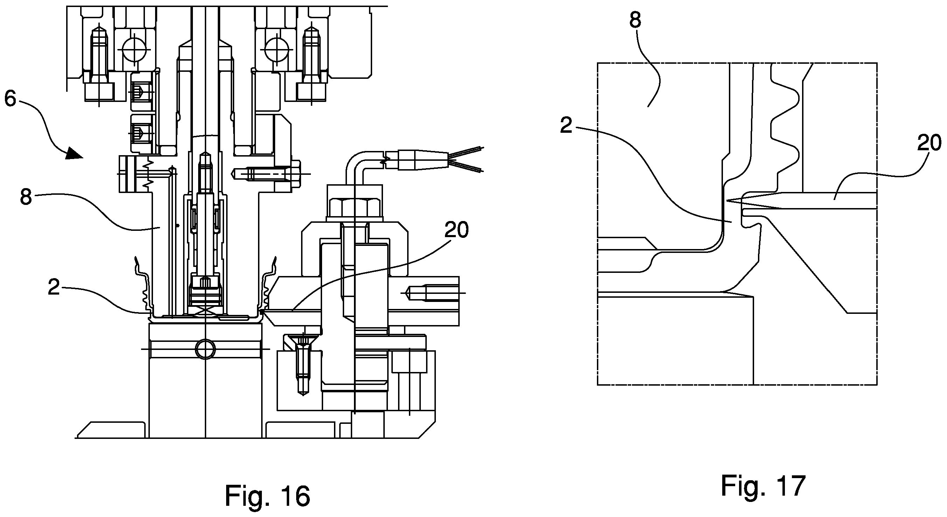

In an illustrated example in figures 15 to 17, the spindle is configured in a manner that is substantially similar to the illustrated example (in particular is carried by a movable support along a path and is rotated around its own axis); the second tool (electrode blade 20) is configured for operating not only as an electrode but also as cutting device. In this case the second tool (electrode blade 20) will have a blade made of conductive material arranged along the aforesaid path to form a facilitated opening line by means of a non-through notch along a circumference of the annular wall.

The second tool (electrode 10 or electrode blade 20) is provided (as in the illustrated examples) with a tip end, which can be cutting (in particular if the second tool acts both as an electrode and as a cutting device, as in the case of the electrode blade 20) or rounded (in particular if the second tool does not act as a cutting device, as in the case of the electrode 10), and is further intended to operate in contact with or near to the annular wall 2.

The system may comprise, as in the specific cases, a third tool (a further electrode 11, also present in the example in figures 12 to 14) made of electrically conductive material and configured for being electrically connected, near to, (as in the illustrated example) or in contact with the first tool (spindle portion 8) in a work position. The third tool may comprise, in particular, the further electrode 11, which is configured in such a manner that the spindle 6, whilst it moves, rotates the annular wall 2 facing the first tool (electrode 10), rotates facing or in contact with the aforesaid further electrode 11. The electrode 10 and the further electrode 11 can be parallel to one another, and can be further spaced apart from one another at least in a direction that is parallel to the rotation axis of the spindle-holding carousel 4, 6. The further electrode 11 may comprise at least a circular-sector shaped part (coaxial with the rotation axis of the carousel 4).

The control means that generates the potential difference between the tools can be configured in such a manner as to apply the electric potential only to the second tool, which will operate as a hot electrode, and in such a manner that the first and the third tool, connected together, operate in collaboration as a cold electrode connected to earth. In particular, the earth connection can be associated with the further electrode 11 (as in the illustrated example).

In use, the first tool, or internal tool, (spindle 6 or spindle portion 8) is inserted inside the annular wall 2 of the object made of plastics (closure for containers). This annular wall 2 may be, for example, opened upwards, so that the internal tool can be inserted from the top. The objects can be fed one by one, in a row, one after another, to the carousel 4 which rotates (with a vertical rotation axis) the plurality of internal tools. Each first (internal) tool enters an object, dragging the object with itself in a complex motion comprising rotation around the axis of the carousel 4 and the rotation around the axis of the first tool (axis of the spindle 6). This motion will enable the object, dragged by the first (internal) tool, to perform a complete revolution, maintaining itself facing the second tool (electrode 10), or external tool, which operates as a (hot) electrode and facing any (external, in the specific case the further electrode 11) third tool that also operates as a (cold) electrode. The first (internal) tool moves in such a manner as to rotate the object whilst maintaining the annular wall 2 facing at a minimum distance (for example approximately 0.1-0.2 mm) from the second external second tool, (electrode 10) and possibly also from the third external tool, (further electrode 11).

In this manner, an entire zone extending along a circumference of the annular wall 2 will be checked point by point. It is observed that at each instant of time the zone being checked is very limited (it is in particular the zone of annular wall 2 directly facing and arranged at a minimum distance from the tool or external electrode), so that it is possible to identify with precision the exact point of the annular wall 2 where the possible defect is present.

The (circumferal) zone checked point by point can be, in particular, a zone along which a non-through cut was previously obtained to form a weakening line or a line of facilitated opening. This line, as known, is used to promote the subsequent opening of the container provided with the closure. If the facilitated opening line has no defects or anomalies, the thickness of the material (plastics) along the line must have a virtually constant desired value (for example of approximately 0.09 mm). If the thickness of material decreases, at least in one point, below a certain threshold value (for example 0.06-0.07 mm) the object (closure or cap for containers) is no longer acceptable.

The checking system is configured in such a way as to generate an electric discharge or spark when the thickness of material is less than the aforesaid threshold value. The discharge is triggered because the thickness of the (electrically non conductive) material is no longer sufficient to give rise to an isolating barrier that is capable of preventing the formation of the discharge or spark.

In other words, the (insulating or dielectric) plastics of the closure prevent the formation of the discharge if the thickness of the closure is everywhere of the desired thickness. The absence or reduction of thickness of the plastics in at least one point of the zone to be checked will trigger the discharge precisely in that point, with consequent recognition of the defect and discarding of the closure. Normally the spark will disrupt the wall.

It should be observed that all the metal or electrically conductive parts of the carousel 4 (such as, for example, shafts, cams, guides, etc) can be grounded, so that, in the event of non efficiency or lack of electric insulation means between the carousel and the generator of electric potential, the risk of having parts of the carousel 4 carrying voltage will be reduced.

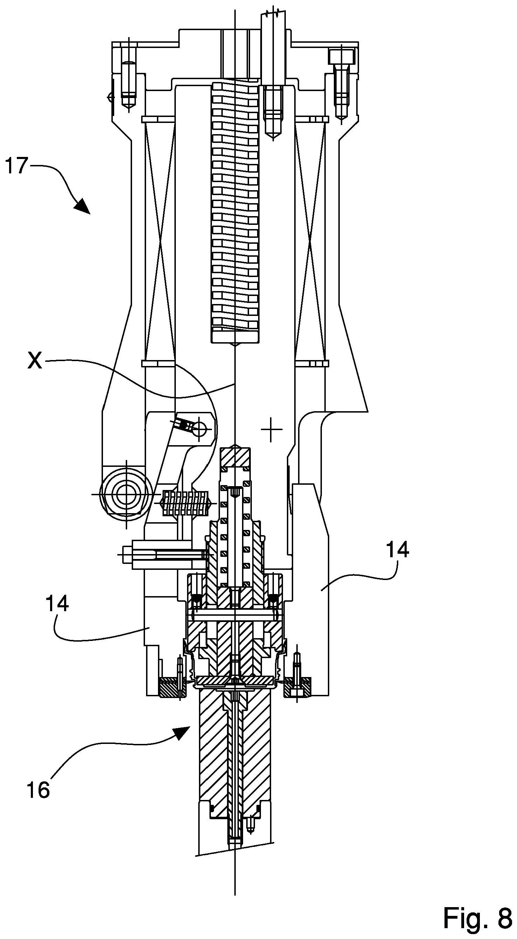

With reference to figures 8 to 11, a comparative example of a checking system is disclosed, which also comprises at least two tools, in which a first (internal) tool, which comprises in the specific case an internal electrode 13, is inserted inside the annular wall 2. The internal electrode 13 can be the grounded cold electrode. The first tool has an axis X.

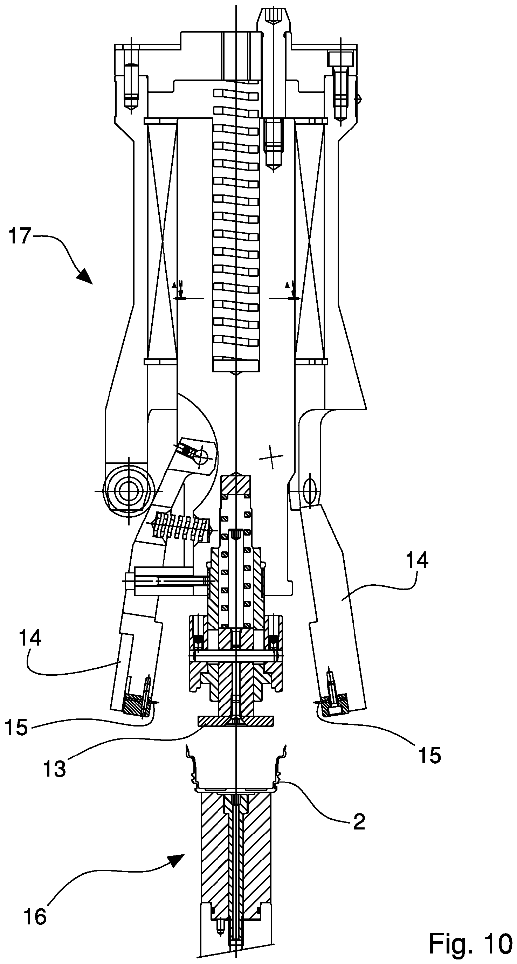

A second (external) tool comprises two or more movable elements 14 configured to assume a closed position (figure 8, 9 and 11), corresponding to the work position of the second tool, in which such elements 14 surround the annular wall 2 along a circumference. In the specific case the movable elements 14 are three in number. The movable elements 14 can further assume an open position (figure 10) in which they enable the annular wall 2 to be inserted between the tools. The movement between the closed and open positions comprises at least one motion component in a direction that is transverse to the axis of the annular wall 2. Each movable element 14 can be, as in the specific case, rotatable around a rotation pivot.

Each movable element 14 comprises an external electrode 15. Each of the external electrodes 15 can, as in the specific example, have the shape of a circular sector. The external electrodes 15, in the closed configuration, will form, in substance, in collaboration between themselves, a single electrode of circular shape that will surround the annular wall 2 in the zone of the facilitated opening line. The external electrodes 15 can form, as in the specific case, the hot (external) electrode to which the potential is applied.

In particular the system with external movable electrodes may comprise, as in the specific case, two supports facing one another, wherein a first (lower) support 16 has the annular wall 2, and a second support 17 has the tools (internal electrode 13 and external electrodes 15). Each pair of supports 16 and 17 can be carried by a conveying carousel (which is not illustrated) that can rotate (for example with a vertical rotation axis) one or more further pairs of supports. The two supports 16 and 17 are movable with respect to one another in a (vertical) direction coinciding with the axis of symmetry of the annular wall 2 carried by the first support 16.

The movable elements 14 that make up the second tool are hinged on the second support 17. The first tool (internal electrode 13) is mounted elastically on the second support 17 with the possibility of elastic adjustments in the direction of the reciprocal axial movement (approaching and distancing) between the supports 16 and 17.

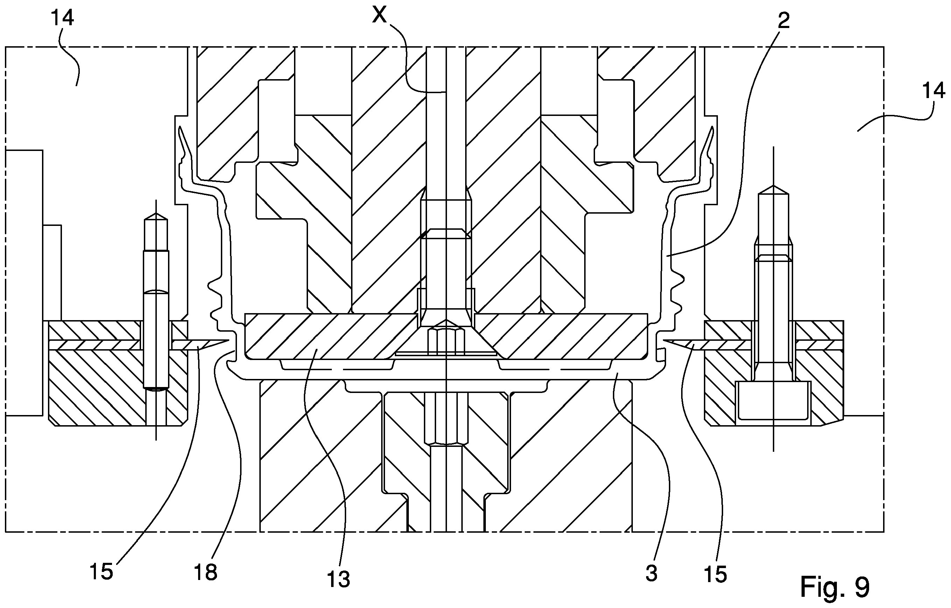

In use, the annular wall 2 is carried by the first support 16. The annular wall 2 is open to the first tool (internal electrode 13) to enable the latter to be inserted. The movable elements 14 are in an open position so as to enable the first tool to be inserted into the annular wall 2. This insertion occurs by the two supports 16 and 17 moving towards one another. After this, the movable elements 14 close around the annular wall 2. In this configuration (see figure 9) the second tool, in particular the electrode formed in collaboration with the external electrodes 15 carried by the respective movable elements 14, surrounds a circumference of the annular wall 2, at the facilitated opening line. The control means generates a potential difference between the tools (internal electrodes 13 and external electrodes 15). In the case of a defect in the thickness of the annular wall 2 (thickness below a threshold value), an electric discharge is generated that traverses the defect zone. The tool to which the electric potential (hot electrode) is applied can be the second (external) tool, whilst the grounded tool (cold electrode) can be the first (internal) tool .

The checking system for checking the thickness of the annular wall does not depend, unless to a minimal extent, on environmental conditions, for example on air temperature and humidity. In fact, the space between the tools at different electric potential, between which the spark or the electric discharge must be triggered in the event of an anomaly, is very reduced. There is thus a minimum air distance between the tools, so the discharge trigger is in substance independent of the presence of air, the influence of which is not easily predicable owing, for example, to variations in temperature and humidity. The checking system is thus relatively precise and reliable, whatever the environmental condition.

The checking system can also operate at a relatively reduced voltage, in particular by virtue of the fact that the distance between the tools or electrodes is very reduced and also by virtue of the fact that the tools or electrodes act with precision in localised mode precisely in the zone of greater risk of formation of thickness defects, i.e. the (notch) zone where the facilitated opening line is located. It is further observed that the size of the electrodes, in particular of the hot electrode to which an electric potential is applied, is relatively reduced.

The checking system may be configured so that the tools (or electrodes) are both (the internal one and the external one) in contact with the wall to be checked. In certain configurations (not shown) the checking system may comprise two or more tools (electrodes) configured so that the wall to be checked is squeezed between the tools.

A method has also been disclosed above for checking defects in an annular wall made of non-electrically conductive material, in which one of the systems disclosed above is used. In particular, the method can be used for an annular wall 2 that is part of an element for closing containers having a facilitated opening line that separates the annular wall 2 from a detachable closing wall 3 that closes a side of the annular wall 2. It is noted that the checking systems disclosed above advantageously enable one of the tools or electrodes (in particular the tool or external electrode), in a work position, to be inserted into a recess 18 of the annular wall 2 having an undercut in the direction of the axis of the annular wall.

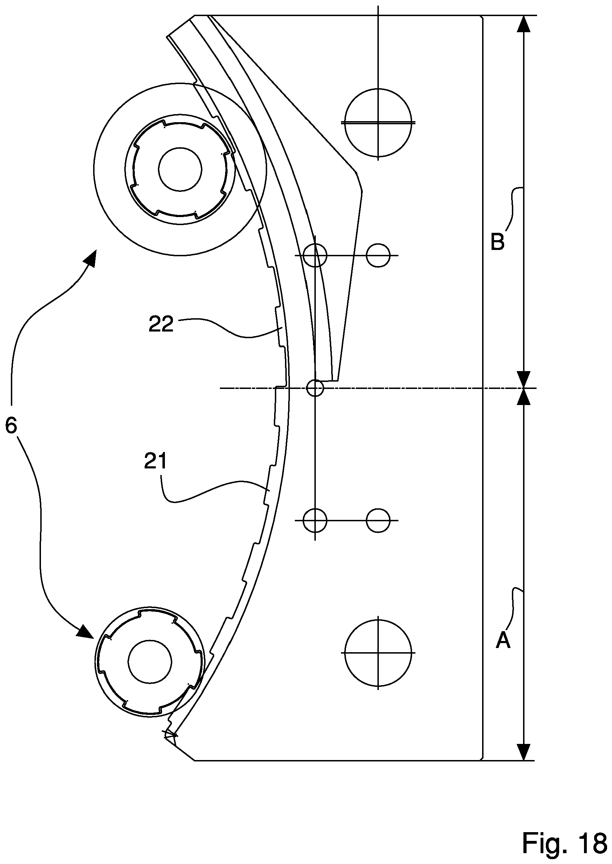

The checking system of figure 18 comprises a cutting zone A and a checking zone B. A shaped blade 21 (e.g. saw-toothed shaped) forms the facilitated opening line and a shaped electrode 22 (shaped in a corresponding manner, e.g. saw-toothed shaped) is configured so as to follow the variable thickness wall. The shaped electrode 22 may be arranged immediately after the shaped blade 22. The spindles 6 will be shaped in a corresponding manner as well. The checking system will operate as above described.

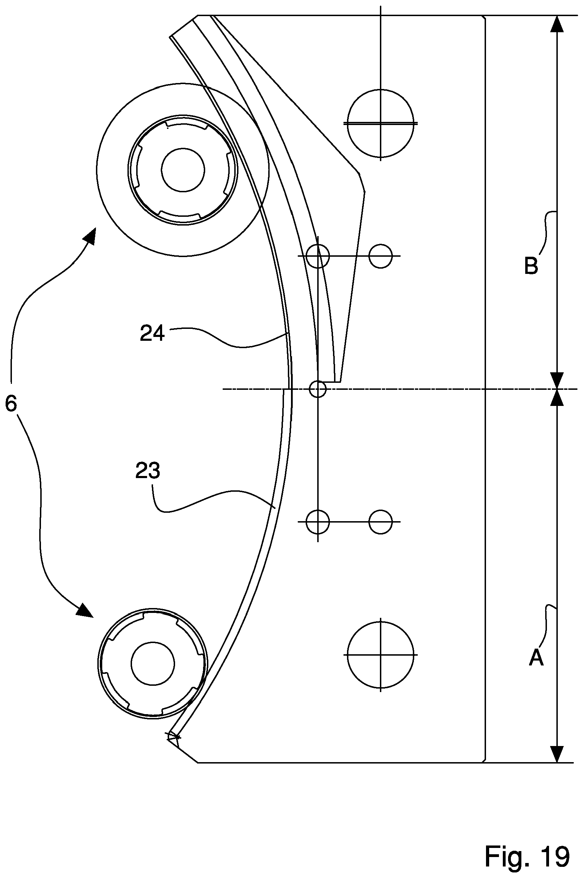

The checking system of figure 19 comprises a cutting zone A and a checking zone B with a blade 23 and an electrode 24 that are circular (not shaped). Before the cutting, the annular wall has a non-uniform thickness, whereby the facilitated opening line that will be checked will have a non-uniform thickness.

The external tool, e.g. the electrode 24 or the electrode 22, may be configured to be tangent to the annular wall or to enter, at least partially, into the annular wall so as to accurately check only the area of the notch.

## Claims

1. System for checking defects in an annular wall (2) made of non-electrically conductive material and wherein a facilitated opening line is formed by means of a non-through notch along a circumference of said annular wall (2), the system comprising:
- a plurality of first tools (6, 8) and a second tool (10; 20), made of electrically conductive material and configured to assume a work position wherein at least one of said first tools and the second tool are configured to be arranged inside and, respectively, outside the annular wall (2), at a first reciprocal distance so as the annular wall to be checked is interposed between said tools (6, 8; 10) said first tools each having an axis (X) and said second tool (10; 20) being arranged to operate in the zone of said non-through notch;
- control means for generating a potential difference between said tools in work position and for detecting the generation of an electric discharge between the tools determined by a defect of the annular wall, such as, for example, an excessive reduction or a lack of thickness;
- movement means (4) for taking said tools to the work position via a relative movement of the first tools with respect to the second tool, wherein said relative movement has at least one motion component in a direction that is transverse to said axis (X); the first tools each comprising a spindle (6, 8) that is rotatable around said axis (X) and is insertible into the annular wall (2) to drag the annular wall (2), the second tool comprising an electrode (10) configured to face said spindles and situated outside the annular wall, the movement means being configured to insert the spindles (6, 8) in the annular wall (2) and to move the spindles so as to rotate the annular wall facing said electrode such that the integrity check is conducted on a circumference of the annular wall, said movement means comprising a carousel (4) that carries said spindles (6, 8) along a circular path;
**characterized in that** said electrode (10; 20) comprises a circular sector coaxial with a rotation axis of said carousel (4) and **in that** said electrode (10; 20) has a tip end intended to be in contact with or near the annular wall.

2. System according to claim 1, comprising a third tool made of electrically conductive material and configured to be electrically connected, in contact with or near said first tool in said work position, wherein said third tool comprises a further electrode (11) configured in such a manner that said spindle (6, 8), whilst it moves so as to rotate the annular wall (2) facing said electrode (10), rotates facing or in contact with, said further electrode (11), said electrode (10) and said further electrode (11) being spaced away from one another in a direction parallel to the rotation axis of the spindle (6, 8).

3. System according to claim 2, wherein said second tool (10) works as a hot electrode to which said control means applies an electric potential, and wherein said first and third tools (6, 8), (11) operate as a cold earthed electrode.

4. System according to any one of the preceding claims, wherein each spindle (6, 8) is carried by the carousel (4) along a path and is rotated around its own axis, and wherein said electrode (10) is arranged along said path and is arranged downstream of a cutting device (19) configured for forming the facilitated opening line, said cutting device being arranged in said path or in a further path made by the annular wall (2) upstream of said path.

5. System according to claim 4, comprising a control unit configured to associate a defective point of the non-through notch, traversed by an electric discharge, with 1130078be EP Claims Sept 2018 Clean Version the corresponding point of the cutting device that has cut the defective point, on the basis of the position of the spindle at the instant of an electric discharge and the movement of the annular wall (2) from the cutting device to the electrode.

6. System according to claim 5, wherein said cutting device comprises a plurality of movable cutting heads, said control unit being configured to associate a defective point of the non-through notch, traversed by an electric discharge, with the corresponding cutting head of the cutting device that has cut the defective point.

7. System according to any one of claims 1 to 3, each spindle (6, 8) being carried by the carousel (4) along a path and is rotated around its own axis (X); said electrode (20) being configured to operate as a cutting device having a blade made of conductive material arranged along said path to form the facilitated opening line.

8. System according to any preceding claim, wherein said tip end is a cutting or rounded tip end.

9. System according to any preceding claim, wherein at least one of said first tools and second tool has a shaped end intended to be in contact with or near the annular wall so as to follow a shaped portion of the annular wall.

10. Method for checking defects in an annular wall (2) made of non-electrically conductive material by making use of a system according to any preceding claim, the method comprising the steps of:
- providing a plurality of first tools (6, 8) and a second tool (10; 20) made of electrically conductive material, each of said first tools (6, 8) having an axis (X) ;
- arranging the tools in a work position wherein at least one of the first tools is arranged inside and the second tool is arranged outside the annular wall (2) that is interposed between said at least one first tool and the second tool, the second tool (10; 20) being arranged to operate in the zone of a non-through notch that forms a facilitated opening line along a circumference of said annular wall (2);
- generating a potential difference between said tools in the work position;
- detecting the generation of an electric discharge between the tools determined by a defect of the annular wall, such as, for example, an excessive reduction or a lack of thickness;
wherein the tools are taken to the work position via a relative movement of the first tools with respect to the second tool, said relative movement having at least one motion component in a direction that is transverse to said axis (X) wherein each of said first tools comprises a spindle (6, 8) that is rotatable around said axis (X) and is insertible into the annular wall (2) to drag the annular wall (2),
the second tool comprises an electrode (10) configured to face said spindles and for being situated outside the annular wall in that working position, the movement means being configured to insert at least one spindle (6, 8) into the annular wall and to move the spindles so as to rotate the annular wall facing said electrode such that the integrity check is conducted on a circumference of the annular wall, said movement means comprising a carousel (4) that carries said spindles (6, 8) along a circular path;
and wherein said electrode (10; 20) comprises a circular sector coaxial with a rotation axis of said carousel (4) and in that said electrode (10; 20) has a tip end intended to be in contact with or near the annular wall.

11. Method according to claim 10, comprising the step of forming said facilitated opening line by means of said non-through notch.

12. Method according to claim 10 or 11, comprising wherein said annular wall (2) is part of an element for closing containers having said facilitated opening line that separates the annular wall (2) from a detachable wall (3) that closes a side of said annular wall.

13. Method according to any one of claims 10 to 12, in which the second tool (10; 20) in work position is inserted into a recess (18) of said annular wall (2) having an undercut in the direction of an axis of said annular wall (2).

14. Method according to any one of claims 10 to 13, wherein said annular wall is axial-symmetric.

## Patentansprüche

1. System zum Prüfen von Defekten in einer Ringwand (2) aus elektrisch nicht-leitfähigem Material, und wobei eine Linie zum erleichterten Öffnen mittels einer nicht-durchgehenden Kerbe entlang eines Umfangs der Ringwand (2) gebildet ist, wobei das System aufweist:
- eine Mehrzahl von ersten Werkzeugen (6, 8) und ein zweites Werkzeug (10; 20) aus elektrisch leitfähigem Material, und die dazu ausgebildet sind, eine Arbeitsposition einzunehmen, wobei zumindest eines der ersten Werkzeuge und das zweite Werkzeug dazu ausgebildet sind, innerhalb bzw. außerhalb der Ringwand (2) in einem ersten wechselseitigen Abstand angeordnet zu werden, so dass die zu prüfende Ringwand zwischen den Werkzeugen (6, 8; 10) angeordnet ist, wobei die ersten Werkzeuge jeweils eine Achse (X) aufweisen und das zweite Werkzeug (10; 20) dazu angeordnet ist, in der Zone der nicht-durchgehenden Kerbe zu wirken;
- Steuerungsmittel zum Erzeugen einer Potenzialdifferenz zwischen den Werkzeugen in der Arbeitsposition und zum Detektieren der Erzeugung einer elektrischen Entladung zwischen den Werkzeugen, die durch einen Defekt der Ringwand bestimmt ist, so wie zum Beispiel eine übermäßige Dickenverringerung oder eine fehlende Dicke;
- Bewegungsmittel (4) zum Bringen der Werkzeuge in die Arbeitsposition über eine Relativbewegung der ersten Werkzeuge bezüglich des zweiten Werkzeugs, wobei die Relativbewegung zumindest eine Bewegungskomponente in einer Richtung aufweist, die quer zu der Achse (X) verläuft;
wobei die ersten Werkzeuge jeweils eine Spindel (6, 8) aufweisen, die um die Achse (X) drehbar und in die Ringwand (2) einsetzbar ist, um die Ringwand (2) in Bewegung zu bringen, wobei das zweite Werkzeug eine Elektrode (10) aufweist, die dazu ausgebildet ist, zu den Spindeln zu weisen, und sich außerhalb der Ringwand befindet, wobei die Bewegungsmittel dazu ausgebildet sind, die Spindeln (6, 8) in die Ringwand (2) einzusetzen und die Spindeln zu bewegen, um die Ringwand, die zu der Elektrode weist, derart zu drehen, dass die Integritätsprüfung an einem Umfang der Ringwand durchgeführt wird, wobei die Bewegungsmittel ein Karussell (4) aufweisen, das die Spindeln (6, 8) entlang eines kreisförmigen Pfades trägt;
**dadurch gekennzeichnet, dass** die Elektrode (10; 20) einen kreisförmigen Sektor aufweist, der mit einer Drehachse des Karussells (4) koaxial ist, und dass die Elektrode (10; 20) ein äußerstes Ende aufweist, das dazu beabsichtigt ist, in Berührung mit oder nahe der Ringwand zu sein.

2. System nach Anspruch 1, mit einem dritten Werkzeug aus elektrisch leitfähigem Material, und das dazu ausgebildet ist, in Berührung mit oder nahe des ersten Werkzeuges in der Arbeitsposition elektrisch angeschlossen zu sein, wobei das dritte Werkzeug eine weitere Elektrode (11) aufweist, die derart ausgebildet ist, dass die Spindel (6, 8), während sie sich bewegt, um die Ringwand (2), die zu der Elektrode (10) weist, zu drehen, sich zu der weiteren Elektrode (11) weisend oder in Berührung mit dieser dreht, wobei die Elektrode (10) und die weitere Elektrode (11) in einer Richtung parallel zur Drehachse der Spindel (6, 8) voneinander beabstandet sind.

3. System nach Anspruch 2, wobei das zweite Werkzeug (10) als eine heiße Elektrode arbeitet, an die die Steuerungsmittel ein elektrisches Potenzial anlegen, und wobei die ersten und dritten Werkzeuge (6, 8, 11) als eine kalte geerdete Elektrode wirken.

4. System nach irgendeinem der vorhergehenden Ansprüche, wobei jede Spindel (6, 8) von dem Karussell (4) entlang eines Pfades getragen und um ihre eigene Achse gedreht wird, und wobei die Elektrode (10) entlang dieses Pfades angeordnet und stromabwärts einer Schneidvorrichtung (19) angeordnet ist, die zum Bilden der Linie zum erleichterten Öffnen ausgebildet ist, wobei die Schneidvorrichtung in dem Pfad oder in einem weiteren Pfad angeordnet ist, der durch die Ringwand (2) stromaufwärts des Pfades hergestellt ist.

5. System nach Anspruch 4, mit einer Steuerungseinheit, die dazu ausgebildet ist, eine Defektstelle der nicht-durchgehenden Kerbe, die von einer elektrischen Entladung durchquert wird, der entsprechenden Stelle des Schneidwerkzeuges zuzuordnen, die die Defektstelle geschnitten hat, auf der Basis der Position der Spindel im Moment einer elektrischen Entladung und der Bewegung der Ringwand (2) von der Schneidvorrichtung zu der Elektrode.

6. System nach Anspruch 5, wobei die Schneidvorrichtung eine Mehrzahl von beweglichen Schneidköpfen aufweist, wobei die Steuerungseinheit dazu ausgebildet ist, eine Defektstelle der nicht-durchgehenden Kerbe, die von einer elektrischen Entladung durchquert wird, dem entsprechenden Schneidkopf der Schneidvorrichtung zuzuordnen, die die Defektstelle geschnitten hat.

7. System nach irgendeinem der Ansprüche 1 bis 3, wobei jede Spindel (6, 8) von dem Karussell (4) entlang eines Pfades getragen und um ihre eigene Achse (X) gedreht wird; wobei die Elektrode (20) dazu ausgebildet ist, als eine Schneidvorrichtung zu wirken, die eine Klinge aus leitfähigem Material aufweist und entlang des Pfades angeordnet ist, um die Linie zum erleichterten Öffnen zu bilden.

8. System nach irgendeinem vorhergehenden Anspruch, wobei das äußerste Ende ein schneidendes oder abgerundetes äußerstes Ende ist.

9. System nach irgendeinem vorhergehenden Anspruch, wobei zumindest eines der ersten Werkzeuge und des zweiten Werkzeugs ein geformtes Ende aufweist, das dazu beabsichtigt ist, in Berührung mit oder nahe der Ringwand zu sein, um so einem geformten Abschnitt der Ringwand zu folgen.

10. Verfahren zum Prüfen von Defekten in einer Ringwand (2) aus elektrisch nicht-leitfähigem Material unter Verwendung eines Systems gemäß irgendeinem vorhergehenden Anspruch, wobei das Verfahren die Schritte aufweist:
- Bereitstellen einer Mehrzahl von ersten Werkzeugen (6, 8) und eines zweiten Werkzeugs (10; 20) aus elektrisch leitfähigem Material,
wobei jedes der ersten Werkzeuge (6, 8) eine Achse (X) aufweist;
- Anordnen der Werkzeuge in einer Arbeitsposition, wobei zumindest eines der ersten Werkzeuge innerhalb und das zweite Werkzeug außerhalb der Ringwand (2) angeordnet ist, die zwischen dem zumindest einen ersten Werkzeug und dem zweiten Werkzeug angeordnet ist, wobei das zweite Werkzeug (10; 20) dazu angeordnet ist, in der Zone einer nicht-durchgehenden Kerbe zu wirken, die eine Linie zum erleichterten Öffnen entlang eines Umfangs der Ringwand (2) bildet;
- Erzeugen einer Potenzialdifferenz zwischen den Werkzeugen in der Arbeitsposition;
- Detektieren der Erzeugung einer elektrischen Entladung zwischen den Werkzeugen, die durch einen Defekt der Ringwand bestimmt ist, so wie zum Beispiel eine übermäßige Dickenverringerung oder eine fehlende Dicke;
wobei die Werkzeuge in die Arbeitsposition mittels einer Relativbewegung der ersten Werkzeuge bezüglich des zweiten Werkzeuges gebracht werden, wobei die Relativbewegung zumindest eine Bewegungskomponente in einer Richtung quer zu der Achse (X) aufweist, wobei jedes der ersten Werkzeuge eine Spindel (6, 8) aufweist, die um die Achse (X) drehbar und in die Ringwand (2) einsetzbar ist, um die Ringwand (2) in Bewegung zu bringen,
wobei das zweite Werkzeug eine Elektrode (10) aufweist, die dazu ausgebildet ist, zu den Spindeln zu weisen und sich außerhalb der Ringwand in diese Arbeitsposition zu befinden,
wobei die Bewegungsmittel dazu ausgebildet sind, zumindest eine Spindel (6, 8) in die Ringwand einzusetzen und die Spindeln zu bewegen, um die Ringwand, die der Elektrode zugewandt ist, zu drehen, derart, dass die Integritätsprüfung an einem Umfang der Ringwand durchgeführt wird, wobei die Bewegungsmittel ein Karussell (4) aufweisen, das die Spindeln (6, 8) entlang eines kreisförmigen Pfades trägt, und wobei die Elektrode (10; 20) einen kreisförmigen Sektor aufweist, der mit einer Drehachse des Karussells (4) koaxial ist, und die Elektrode (10; 20) ein äußerstes Ende aufweist, das dazu beabsichtigt ist, in Berührung mit oder nahe der Ringwand zu sein.

11. Verfahren nach Anspruch 10, mit dem Schritt eines Bildens der Linie zum erleichterten Öffnen mittels der nicht-durchgehenden Kerbe.

12. Verfahren nach Anspruch 10 oder 11, wobei die Ringwand (2) Teil eines Elements zum Verschließen von Behältern ist, das die Linie zum erleichterten Öffnen aufweist, die die Ringwand (2) von einer abtrennbaren Wand (3) trennt, die eine Seite der Ringwand schließt.

13. Verfahren nach irgendeinem der Ansprüche 10 bis 12, bei dem das zweite Werkzeug (10; 20) in Arbeitsposition in eine Ausnehmung (18) der ringförmigen Wand (2) eingesetzt wird, die eine Unterschneidung in der Richtung einer Achse der Ringwand (2) aufweist.

14. Verfahren nach irgendeinem der Ansprüche 10 bis 13, wobei die Ringwand axialsymmetrisch ist.

## Revendications

1. Système pour contrôler des défauts dans une paroi annulaire (2) faite d'un matériau non électriquement conducteur et dans lequel une ligne d'ouverture facilitée est formée au moyen d'une entaille non traversante le long d'une circonférence de ladite paroi annulaire (2), le système comprenant :
- une pluralité de premiers outils (6, 8) et un deuxième outil (10 ; 20) faits d'un matériau électriquement conducteur et configurés pour prendre une position de travail dans laquelle au moins un desdits premiers outils et le deuxième outil sont configurés pour être agencés à l'intérieur et, respectivement, à l'extérieur de la paroi annulaire (2), à une première distance réciproque de manière que la paroi annulaire à contrôler soit interposée entre lesdits outils (6, 8 ; 10), lesdits premiers outils ayant chacun un axe (X) et le deuxième outil (10 ; 20) étant agencé pour fonctionner dans la zone de ladite entaille non traversante ;
- des moyens de commande pour générer une différence de potentiel entre lesdits outils en position de travail et pour détecter la génération d'une décharge électrique entre les outils déterminée par un défaut de la paroi annulaire, tel que, par exemple, une réduction excessive ou un manque d'épaisseur ;
- des moyens de déplacement (4) pour emmener lesdits outils jusqu'à la position de travail via un déplacement relatif des premiers outils par rapport au deuxième outil, dans lequel ledit déplacement relatif a au moins une composante de mouvement dans une direction qui est transversale audit axe (X) ;
les premiers outils comprenant chacun une broche (6, 8) qui peut tourner autour dudit axe (X) et peut être insérée dans la paroi annulaire (2) pour traîner la paroi annulaire (2), le deuxième outil comprenant une électrode (10) configurée pour faire face auxdites broches et située à l'extérieur de la paroi annulaire, les moyens de déplacement étant configurés pour insérer les broches (6, 8) dans la paroi annulaire (2) et pour déplacer les broches de manière à faire tourner la paroi annulaire faisant face à ladite électrode de telle sorte que le contrôle d'intégrité soit réalisé sur une circonférence de la paroi annulaire, lesdits moyens de déplacement comprenant un carrousel (4) qui porte lesdites broches (6, 8) le long d'un trajet circulaire ;
**caractérisé en ce que** ladite électrode (10 ; 20) comprend un secteur circulaire coaxial à un axe de rotation dudit carrousel (4) et **en ce que** ladite électrode (10 ; 20) a une extrémité d'embout destinée à être en contact avec la paroi annulaire ou près de celle-ci.

2. Système selon la revendication 1, comprenant un troisième outil fait d'un matériau électriquement conducteur et configuré pour être électriquement relié, en contact avec ledit premier outil dans ladite position de travail ou proche de celui-ci, dans lequel ledit troisième outil comprend une électrode supplémentaire (11) configurée de telle manière que ladite broche (6, 8), lorsqu'elle se déplace de manière à faire tourner la paroi annulaire (2) faisant face à ladite électrode (10), tourne face à ladite électrode supplémentaire (11) ou en contact avec celle-ci, ladite électrode (10) et ladite électrode supplémentaire (11) étant espacées l'une de l'autre dans une direction parallèle à l'axe de rotation de la broche (6, 8).

3. Système selon la revendication 2, dans lequel ledit deuxième outil (10) fonctionne comme une électrode chaude à laquelle lesdits moyens de commande appliquent un potentiel électrique, et dans lequel lesdits premiers et troisième outils (6, 8, 11) fonctionnent comme une électrode froide mise à la terre.

4. Système selon l'une quelconque des revendications précédentes, dans lequel chaque broche (6, 8) est portée par le carrousel (4) le long d'un trajet et tourne autour de son axe propre, et dans lequel ladite électrode (10) est agencée le long dudit trajet et est agencée en aval d'un dispositif de coupe (19) configuré pour former la ligne d'ouverture facilitée, ledit dispositif de coupe étant agencé dans ledit trajet ou dans un trajet supplémentaire réalisé par la paroi annulaire (2) en amont dudit trajet.

5. Système selon la revendication 4, comprenant une unité de commande configurée pour associer un point défectueux de l'entaille non traversante, traversée par une décharge électrique, au point correspondant du dispositif de coupe qui a coupé le point défectueux, sur la base de la position de la broche à l'instant d'une décharge électrique et du déplacement de la paroi annulaire (2) du dispositif de coupe à l'électrode.

6. Système selon la revendication 5, dans lequel ledit dispositif de coupe comprend une pluralité de têtes de coupe mobiles, ladite unité de commande étant configurée pour associer un point défectueux de l'entaille non traversante, traversée par une décharge électrique, à la tête de coupe correspondante du dispositif de coupe qui a coupé le point défectueux.

7. Système selon l'une quelconque des revendications 1 à 3, chaque broche (6, 8) étant portée par le carrousel (4) le long d'un trajet et tourne autour de son axe propre (X) ; ladite électrode (20) étant configurée pour fonctionner comme un dispositif de coupe ayant une lame faite d'un matériau conducteur agencée le long dudit trajet pour former la ligne d'ouverture facilitée.

8. Système selon l'une quelconque des revendications précédentes, dans lequel ladite extrémité d'embout est une extrémité d'embout coupante ou arrondie.

9. Système selon l'une quelconque des revendications précédentes, dans lequel au moins l'un desdits premiers outils et deuxième outil a une extrémité conformée destinée à être en contact avec la paroi annulaire ou proche de celle-ci de manière à suivre une portion conformée de la paroi annulaire.

10. Procédé pour contrôler des défauts dans une paroi annulaire (2) faite d'un matériau non électriquement conducteur en utilisant un système selon l'une quelconque des revendications précédentes, le procédé comprenant les étapes de :
- fournir une pluralité de premiers outils (6, 8) et un deuxième outil (10 ; 20) fait d'un matériau électriquement conducteur, chacun desdits premiers outils (6, 8) ayant un axe (X) ;
- agencer les outils dans une position de travail dans laquelle au moins un des premiers outils est agencé à l'intérieur et le deuxième outil est agencé à l'extérieur de la paroi annulaire (2) qui est interposée entre ledit au moins un premier outil et le deuxième outil, le deuxième outil (10 ; 20) étant agencé pour fonctionner dans la zone d'une entaille non traversante qui forme une ligne d'ouverture facilitée le long d'une circonférence de ladite paroi annulaire (2) ;
- générer une différence de potentiel entre lesdits outils dans la position de travail ;
- détecter la génération d'une décharge électrique entre les outils déterminée par un défaut de la paroi annulaire, tel que, par exemple, une réduction excessive ou un manque d'épaisseur ;
dans lequel les outils sont emmenés jusqu'à la position de travail via un déplacement relatif des premiers outils par rapport au deuxième outil, ledit déplacement relatif ayant au moins une composante de mouvement dans une direction qui est transversale audit axe (X) dans lequel chacun desdits premiers outils comprend une broche (6, 8) qui peut tourner autour dudit axe (X) et peut être insérée dans la paroi annulaire (2) pour traîner la paroi annulaire (2),
le deuxième outil comprend une électrode (10) configurée pour faire face auxdites broches et pour être située à l'extérieur de la paroi annulaire dans cette position de travail, les moyens de déplacement étant configurés pour insérer au moins une broche (6, 8) dans la paroi annulaire et pour déplacer les broches de manière à faire tourner la paroi annulaire faisant face à ladite électrode de telle sorte que le contrôle d'intégrité soit réalisé sur une circonférence de la paroi annulaire, lesdits moyens de déplacement comprenant un carrousel (4) qui porte lesdites broches (6, 8) le long d'un trajet circulaire ; et dans lequel ladite électrode (10 ; 20) comprend un secteur circulaire coaxial à un axe de rotation dudit carrousel (4) et en ce que ladite électrode (10 ; 20) a une extrémité d'embout destinée à être en contact avec la paroi annulaire ou proche de celle-ci.

11. Procédé selon la revendication 10, comprenant l'étape de former ladite ligne d'ouverture facilitée au moyen de ladite entaille non traversante.

12. Procédé selon la revendication 10 ou 11, dans lequel ladite paroi annulaire (2) est une partie d'un élément destiné à fermer des contenants ayant ladite ligne d'ouverture facilitée qui sépare la paroi annulaire (2) d'une paroi détachable (3) qui ferme un côté de ladite paroi annulaire.

13. Procédé selon l'une quelconque des revendications 10 à 12, dans lequel le deuxième outil (10 ; 20) en position de travail est inséré dans un évidement (18) de ladite paroi annulaire (2) ayant une contre-dépouille dans la direction d'un axe de ladite paroi annulaire (2).

14. Procédé selon l'une quelconque des revendications 10 à 13, dans lequel ladite paroi annulaire est à symétrie axiale.
